# EUROPEAN PATENT SPECIFICATION

(11) **EP 3 449 732 B1**
(45) Date of publication and mention of the grant of the patent: **01.07.2020**
(21) Application number: 18188471.9
(22) Date of filing: 10.08.2018
(51) Int. Cl.: A23G 9/28, A23G 9/22, A23G 9/08

(54) **BATCH FREEZER WITH FAST AND SAFE BLOCKING AND OPENING**
SPEISEEISBEREITER MIT SCHNELLER UND SICHERER BLOCKIERUNG UND ÖFFNUNG
CONGÉLATEUR DE LOTS AVEC BLOCAGE ET OUVERTURE RAPIDES ET SÛRS

(30) Priority: 30.08.2017 IT 201700097347
(43) Date of publication of application: 06.03.2019
(73) Proprietor: BRAVO S.p.A., 36075 Montecchio Maggiore (Vicenza) (IT)
(72) Inventor: BRAVO, STEFANO, 36050 SOVIZZO - VICENZA (IT)
(74) Representative: Martegani, Franco

(56) References cited:
- EP-A1- 0 495 211
- EP-A1- 1 787 526
- JP-A- H11 169 087
- US-A- 4 364 666
- US-A1- 2005 183 426
- US-A1- 2013 257 066
- US-B1- 6 817 203

## Description

The present invention relates to a batch freezer with fast and safe blocking and opening. The invention is defined by the claims.

The freezing of ice-cream involves freezing a mixture by mixing it with considerable force in order to incorporate the maximum quantity of air (overrun) in the shortest possible time. Examples of such machines are disclosed in US 6817203 B1 and EP 1787526 A1.

The rotational speeds of the mixer are constant but there are cases in which they can vary to avoid lowering the overrun reached. This overrun has a maximum peak a few degrees below zero, not sufficient for obtaining a structure suitable for the presentation of the finished product in the display case. For this reason, the product must be brought to about ten degrees below zero, otherwise the structure would not be strong enough to be maintained during exposure in the display case.

At the end of the freezing process, the ice cream must be extracted as soon as possible and for this purpose, the stirrer is put in "extraction" mode, i.e. at the maximum rotation speed.

This operation has various problems as the stoppage of the rotating stirrer in known batch freezers requires a certain amount of time, which, as mentioned, is not acceptable for maintaining the quality of the product being extracted.

The operator therefore tends to intervene in order to facilitate and accelerate this extraction, first of all endangering himself and secondly the same integrity of the batch freezer.

Currently therefore, no braking systems are provided for increasing the safety of the machine and in parallel ensuring that the mixer stops as soon as possible, i.e. when the power is removed from the motor, relying on the braking capacity of the gear motors or scraping capacity of the blades on the surface of the cylinder.

These systems however are subject to wear and must be rigorously maintained, otherwise they lose their effectiveness.

The general objective of the present invention is therefore to provide a batch freezer with fast and safe blocking and opening, capable of solving the above-mentioned drawbacks of the known art in an extremely simple, economical and particularly functional manner.

The above objectives are achieved by a batch freezer produced according to the independent claim 1 and following dependent claims.

The structural and functional characteristics of the present invention and its advantages with respect to the known art will appear even more evident from the following description, referring to the enclosed schematic drawings, which show an embodiment example of the invention itself. In the drawings:
- figure 1 is a perspective view of a front part of a batch freezer according to the present invention equipped with an insertion hopper and gridded extraction door with a flange provided with a safe blocking-unblocking opening group;
- figure 2 is a perspective view of a front extraction part of a batch freezer according to the present invention of figure 1 without the flange for access to the freezing cylinder and showing in detail the safe blocking-unblocking opening group of the flange (removed for a better vision of the parts);
- figures 3 and 4 are two enlarged views, one in perspective from above and the other in perspective from above, partially sectioned, split and rotated with respect to the previous one, of the blocking-unblocking group alone in a closed engaged position;
- figure 5 is a plan view of what is illustrated in figure 3;
- figure 6 is an enlarged sectional view of the engagement area of the group with the batch freezer;
- figure 7 is a similar view to that of figure 3 of the blocking-unblocking group alone in an open disengaged position, enlarged in perspective from above;
- figure 8 is a block diagram showing functioning steps of the batch freezer of the present invention in relation to actuation phases of the closure flange of the freezing cylinder and requests for opening and access to the freezing cylinder.

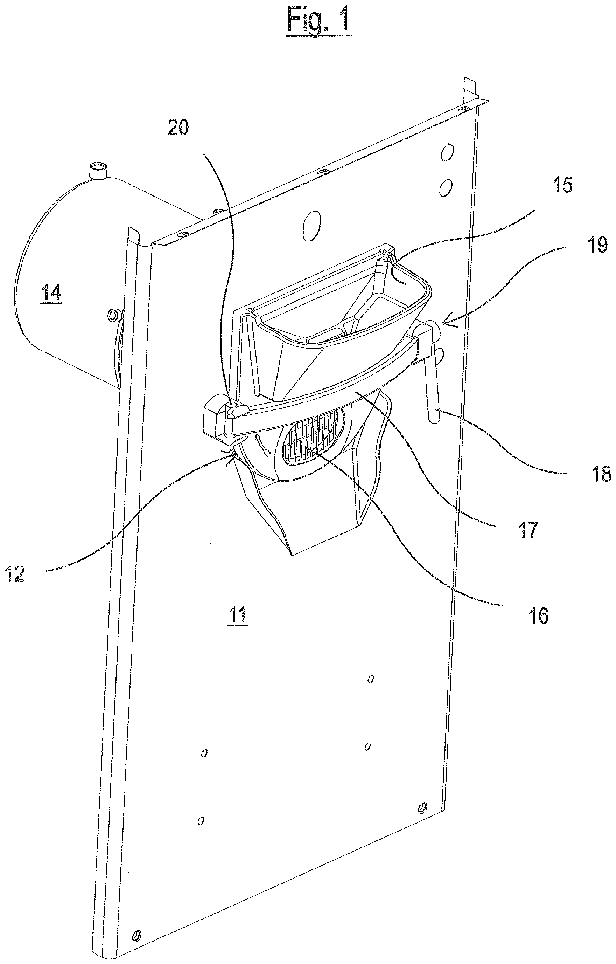

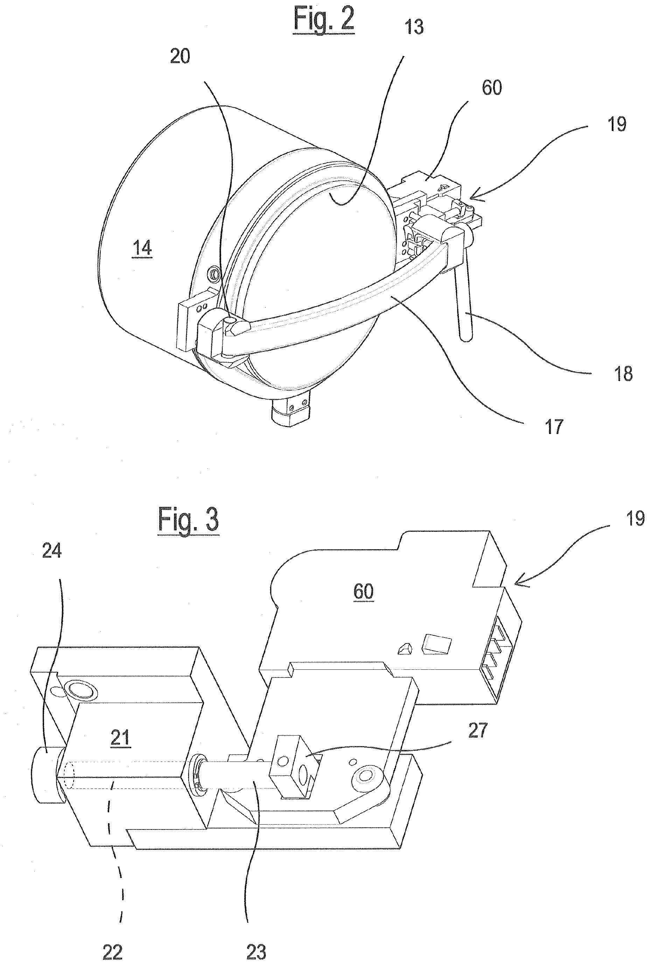

With reference to figures 1 and 2, these show part of a batch freezer with fast and safe blocking and opening according to the present invention.

A batch freezer is shown inter alia comprising a front wall 11 provided with an access or closure flange 12 for an opening 13 positioned in the front in a freezing cylinder 14.

A hopper 15 is positioned above the flange 12 for the insertion of ingredients for the production of ice-cream that will be transformed, or, if necessary, for inspecting the product being processed.

Beneath the flange 12, a gridded door 16 is also provided, from which the finished product is extracted.

The flange 12 is arranged for closing the above-mentioned opening 13 and is positioned on a closing crosspiece 17 articulated with a pin 20 at a first end to the front wall 11. A second end of the closing crosspiece 17 carries a blocking lever or control lever or handle 18 with which a safety blocking-unblocking group 19 is associated for a safe opening.

The safety blocking-unblocking group 19 according to the present invention can be associated with the closing crosspiece 17 or, completely equivalently, with the blocking lever 18.

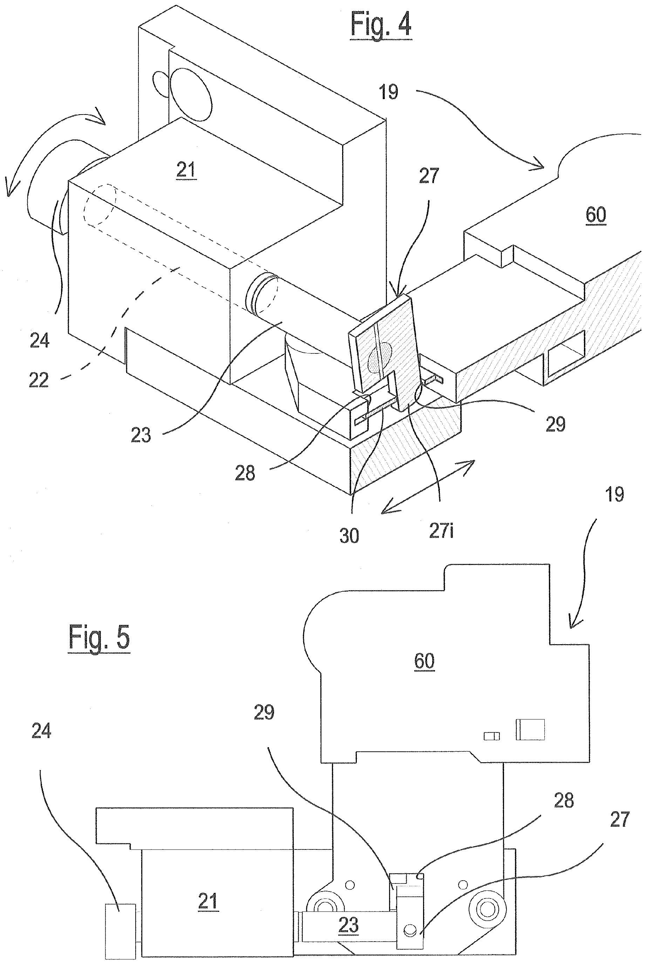

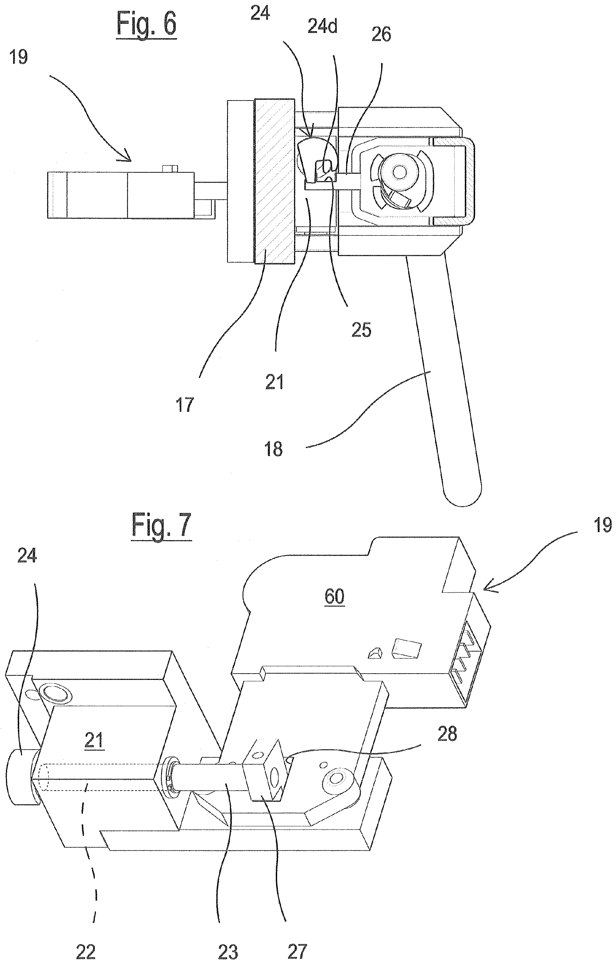

In the example shown in figures 3 to 7, this blocking-unblocking group 19 is associated in one of its non-limiting embodiments, with the access flange 12 and acts to block the access flange 12 to the freezing cylinder 14.

This blocking-unblocking group 19 comprises an interlocking device 60 certified for use and the number of cycles necessary for being defined as a safety device.

A supporting body 21 houses, in one of its pass-through holes 22, a shaft 23 which protrudes from opposite sides with respect to the supporting body 21. Said shaft integrally carries at one end a wedge hook 24 which collaborates with a seat 25 of a rod 26 integral with the closing crosspiece 17.

At the other free end, the shaft 23 carries a lever 27 inserted in a slot 28 of the blocking-unblocking group 19. A lower end 27i of the lever 27 is moved forwards and backwards by a metal sheet 30 of the interlocking device 60 of the blocking-unblocking group 19 and said lower end 27i is positioned without clearance in the slot 28.

The lever 27 has a mechanical actuation due to the thrust of the crosspiece 17. It should also be noted that the lower end 27i of the lever is positioned with minimum clearance inside a slot 29 present in an underlying metal sheet 30 which slides backwards and forwards. The metal sheet 30 and the lever 27 are concatenated so that the movement of one obliges the movement of the other. The lever 27 therefore moves the metal sheet 30 in a blocking position and this does not allow the lever 27 to return to an open position. The blocking of the metal sheet 30 takes place thanks to a bimetallic component (not shown) which, by heating and expanding, blocks the movement of the metal sheet itself 30. There are two possibilities for returning to an open position and therefore allowing the lever 27 to be released:
1) waiting for the bimetal to cool and return to rest position
2) the bimetal is electromagnetically obliged by means of an impulse to return to rest position.

Thanks to this interlocking device 60, it is possible to enable the opening of the flange 12 with different delays with respect to a certain event.

In particular, the release time of the opening 13 can be controlled in the case of voluntary stoppage of the mixer by acting on the electric drive by means of a microcontroller, leaving the automatic release operation to the mechanical actuator, in the case of opening of the handle 18, with timing related to the specifications of the interlocking device 60 of the safety blocking-unblocking group 19.

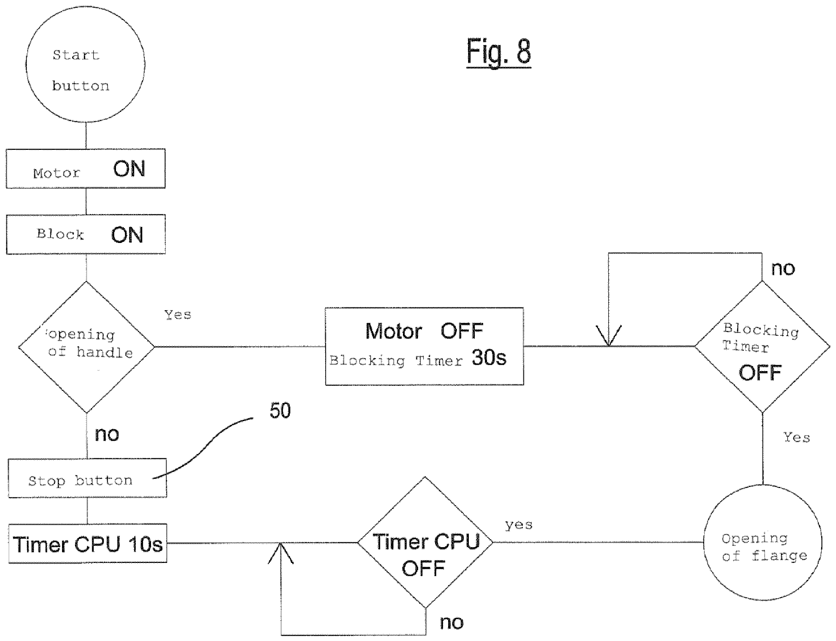

By way of example, the block diagram shown in figure 8 provides that, from a phase in which the motor is switched on and the interlocking device 60 of the safety blocking-unblocking group 19 is activated, the blocking can be deactivated and therefore the flange 12 opened:
1) after opening the handle 18;
2) after pressing a stop button 50.

In the first case, the opening of the handle 18 is communicated by a sensor to a microcontroller (not shown) which turns off the motor and cuts off the power supply to the interlocking device 60 of the blocking-unblocking group 19. In this way, after a prefixed time (in the example of the figures about 30 seconds) linked to the characteristics of the mechanical drive described above, the lever 27 passes to a withdrawn position, allowing the release of closure flange of the opening 13.

In the second case, a sensor communicates to the microcontroller the pressing of the stop button 50 with the handle closed, for example to start the extraction maneuver of the product. After a settable time (in the example of the figures about 10 seconds), the microcontroller sends an unblocking command to the interlocking device 60 of the blocking-unblocking group 19 allowing the release of the closure flange 12 of the opening 13.

In this way it is possible to reduce the release time to the minimum necessary to ensure the best quality of the product to be extracted, at the same time preserving high safety levels against accidental openings.

The functioning is relatively simple: the metal sheet 30 slotted in 29 slides into the seat of the interlocking device 60 which is not shown as it depends on the type of construction of this object and may vary according to the manufacturer, allowing or not the release of the wedge hook 24. The wedge hook 24 rotates thanks to two forces: the first an armament force that derives from the hooking rod 26 which extends from the flange 12 which pushes a face of the wedge-shaped hook 24 causing it to rotate and interlocking it with its tooth 24d in the seat 25 of the rod 26 of the flange 12. Inside the interlocking device 60, there is a spring (not visible) which acts at the moment of release by rotating the wedge hook 24 in the opposite direction to the armament. In this way, the tooth 24d of the wedge hook 24 moves, allowing the rod 26 to slide. The release is enabled in two ways: waiting for a cooling time from 30 to 120 seconds, or by means of an impulse. In this way, an electronic card can send the impulse in adequate time, 10s are sufficient, after having pressed the stop button (stop) 50 of the mixer. An attempt to open the access flange 12 during the movement of the mixer entails the intervention of a safety microswitch (not shown) which cuts off power to the motor. In the case of this intervention, a waiting time starts, depending on the temperature of the locking-unblocking group 19 which can vary from 30 to 120 seconds. After this waiting time, the interlocking device 60 of the locking-unblocking group 19 unblocks itself. This also happens in the case of total power failure, an event that cannot be managed by any electronics.

The timer of the interlocking device 60, shown as Motor OFF blocking timer 30s in the diagram of figure 8, is in fact of the mechanical type, linked to the cooling of a metal lamella. The metal lamella, which is inside the interlocking device 60, varies its curvature based on the heat developed during the feeding of the locking-unblocking group 19. A modification of the curvature activates a pin inside the locking-unblocking group 19 which blocks the movement of the metal sheet 30 which, in turn, blocks the wedge hook 24 and consequently the access flange 12.

In the embodiment shown, a standard interlocking device 60 of Bitron has been taken, in this case the model DL-S1 which can be unblocked by command, whereas in most cases they can all only be unblocked by time. The flange 12 has been modified by providing the crosspiece 17 with a rod 26 which allows blockage but with a couple of millimeters of air to be able to act on the control lever 18 enabling the detachment of the safety magnet. The rod 26 and the wedge hook 24 actuate a shaft 23 causing it to rotate by only 30° by means of the slots obtained on its head (not shown). The lever 27 is welded at the other end, which actuates the metal sheet 30 of the interlock 19 and at the same time is constrained to it so that, in blocking mode, it cannot counter-rotate.

This kinematism has been designed so as not to depend on the geometry of the interlocking device used but, depending on the model present on the market, it can be adapted simply and retroactively.

As indicated before, the description of an embodiment of the safety locking-unlocking group 19 according to the present invention can be associated, in addition to the closing crosspiece 17, also to the blocking lever 18 in a completely equivalent manner.

In this way the mechanical device which acts on the crosspiece 17 for blocking it, can be transferred with other geometries to the lever 18. A "safety device" is thus created which must be removed each time the lever 18 is activated, which will remain interlocked by a blocking mechanism.

In this way, there are two possible actions:
if the machine is not blocked, the "safety device" can be removed and the lever 18 pulled;
if the machine is blocked, the " safety device " will be blocked and it will not be possible to act on the lever 18 until the stop button 50 has been pressed or at least 30 seconds have elapsed after the motor has stopped.

In order to operate the motor, the "safety device" must be in armament position, thus blocking the lever 18.

In practice, it is a mirror operation with respect to that described, with the difference that the function of the crosspiece 17 is now effected by the "safety device".

The objective mentioned in the preamble of the description has thus been achieved.

The protection scope of the present invention is defined by the enclosed claims.

## Claims

1. A batch freezer with fast and safe blocking and opening comprising a front wall (11) provided with an access or closure flange (12) for an opening (13) positioned in the front in a freezing cylinder (14), a hopper (15) for the insertion of ingredients for the production of ice cream, positioned above the flange (12) and a gridded door (16) for extracting the finished product positioned in the lower portion of said flange (12), said flange (12) being positioned on a closing crosspiece (17) articulated with a pin (20) at a first end to the front wall (11) and carrying a blocking lever (18) at a second end **characterized in that** a safety blocking-unblocking group (19), configured for blocking said access flange (12) to the freezing cylinder (14), is associated with said closing crosspiece (17) or said blocking lever (18), the batch freezer comprising a sensor connected to a microcontroller which switches off the motor of the mixer the batch freezer and removes the power supply from the blocking-unblocking group (19) so that, after a pre-fixed time after opening of the blocking lever (18) communicated by the sensor, the flange (12), which closes the closure of the opening (13), is released and further comprising a sensor which communicates to said microcontroller the pressing of the stop button (50) of the mixer with the blocking lever (18) closed, so that said microcontroller, after a settable time, sends a release command to the blocking-unblocking group (19) allowing the flange (12), which flange closes the opening (13), to be released, and wherein said blocking-unblocking group (19)comprises an interlocking device (60) positioned integrally with said front wall (11) which collaborates with a rod (26) integral with the closing crosspiece (17) by means of a wedge hook (24).

2. The batch freezer according to claim 1, **characterized in that** a supporting body (21) is positioned on said front wall (11) and houses, in a pass-through hole (22) of the same, a shaft (23) protruding from opposite sides with respect to the supporting body (21), wherein said shaft (23) integrally carries, at a first end, said wedge hook (24), which collaborates with a seat (25) of said rod (26) and, at the other free end, it carries a lever (27) inserted in a slot (28) of the interlocking device (60) of the blocking-unblocking group (19), wherein a lower end (27i) of the lever (27) is moved forwards and backwards by a metal sheet (30) of the interlocking device (60) of the blocking-unblocking group (19).

3. The batch freezer according to claim 1 or 2 **characterized in that** said wedge hook (24) provides, at its free end, a tooth (24d) positioned in a seat (25) of the rod (26) which extends from the flange (12).

## Patentansprüche

1. Speiseeisbereiter mit schneller und sicherer Blockierung und Öffnung, umfassend:
eine Frontwand (11), die mit einem Zugangs- oder Verschlussflansch (12) für eine Öffnung (13) versehen ist, die im vorderen Ende in einem Gefrierzylinder (14) angeordnet ist; einen Trichter (15) zum Einfüllen von Zutaten für die Herstellung von Speiseeis, wobei der Trichter oberhalb des Flansches (12) angeordnet ist; und eine Gittertür (16) zum Herausnehmen des fertigen Produkts, die im unteren Teil des Flansches (12) angeordnet ist, wobei der Flansch (12) auf einem Querverschlussbügel (17) angeordnet ist, der mit einem Zapfen (20) an einem ersten Ende an der Frontwand (11) angelenkt ist und an einem zweiten Ende einen Blockierhebel (18) trägt,
**dadurch gekennzeichnet, dass**
dem Querverschlussbügel (17) oder dem Blockierhebel (18) eine Sicherheits-Blockier-Freigabe-Gruppe (19) zugeordnet ist, die zum Blockieren des Zugangsflansches (12) zu dem Gefrierzylinder (14) ausgebildet ist, wobei der Speiseeisbereiter einen Sensor umfasst, der mit einer Mikrosteuerung verbunden ist, die den Motor des Mischers des Speiseeisbereiters abschaltet und die Stromversorgung von der Blockier-Freigabe-Gruppe (19) entfernt, so dass nach einer vorbestimmten Zeit nach dem Öffnen des Blockierhebels (18), die durch den Sensor mitgeteilt wird, der Flansch (12), der den Verschluss der Öffnung (13) verschließt, freigegeben wird, und wobei der Speiseeisbereiter weiterhin einen Sensor aufweist, der der Mikrosteuerung das Drücken des Stoppknopfes (50) des Mischers bei geschlossenem Blockierhebel (18) mitteilt, so dass die Mikrosteuerung nach einer einstellbaren Zeit einen Freigabebefehl an die Blockier-Freigabe-Gruppe (19) sendet, wodurch der Flansch (12), der die Öffnung (13) verschließt, freigegeben werden kann, und wobei die Blockier-Freigabe-Gruppe (19) eine Verriegelungseinrichtung (60) umfasst, die integral mit der Frontwand (11) positioniert ist, die mit einer Stange (26) zusammenwirkt, die mittels eines Keilhakens (24) integral mit dem Querverschlussbügel (17) ausgebildet ist.

2. Speiseeisbereiter nach Anspruch 1, **dadurch gekennzeichnet, dass** ein Stützkörper (21) an der Frontwand (11) angeordnet ist und, in einem Durchgangsloch (22) desselben, einen Schaft (23) aufnimmt, der von gegenüberliegenden Seiten in Bezug auf den Stützkörper (21) vorsteht, wobei der Schaft (23), an einem ersten Ende, den Keilhaken (24) integral trägt, der mit einem Sitz (25) der Stange (26) zusammenwirkt und, am anderen freien Ende, einen Hebel (27) trägt, der in einen Schlitz (28) der Verriegelungseinrichtung (60) der Blockier-Freigabe-Gruppe (19) eingeführt ist, wobei ein unteres Ende (27i) des Hebels (27) durch ein Metallblech (30) der Verriegelungseinrichtung (60) der Blockier-Freigabe-Gruppe (19) vorwärts und rückwärts bewegt wird.

3. Speiseeisbereiter nach Anspruch 1 oder 2, **dadurch gekennzeichnet, dass** der Keilhaken (24), an seinem freien Ende, einen Zahn (24d) aufweist, der in einem Sitz (25) der Stange (26) angeordnet ist, die sich vom Flansch (12) aus erstreckt.

## Revendications

1. Congélateur par lots avec blocage et ouverture rapides et sûrs, comprenant une paroi avant (11) pourvue d'une bride d'accès ou de fermeture (12) pour une ouverture (13) positionnée à l'avant dans un cylindre de congélation (14), un bac (15) pour insérer des ingrédients pour produire de la crème glacée, positionné au-dessus de la bride (12) et une porte grillagée (16) pour extraire le produit fini positionnée dans la partie inférieure de ladite bride (12), ladite bride (12) étant positionnée sur une pièce transversale de fermeture (17) articulée à l'aide d'une broche (20) à une première extrémité sur la paroi avant (11) et portant un levier de blocage (18) à une seconde extrémité,
**caractérisé en ce qu'**un groupe de blocage/déblocage de sécurité (19), configuré de manière à bloquer ladite bride d'accès (12) sur le cylindre de congélation (14), est associé à ladite pièce transversale de fermeture (17) ou audit levier de blocage (18), le congélateur par lots comprenant un capteur connecté à un micro-dispositif de commande qui coupe le moteur du mélangeur du congélateur par lots et qui supprime l'alimentation électrique en provenance du groupe de blocage/déblocage (19) de telle sorte que, après un temps préétabli après l'ouverture du levier de blocage (18) communiquée par le capteur, la bride (12), qui assure la fermeture de l'ouverture (13), est relâchée, et comprenant en outre un capteur qui communique audit micro-dispositif de commande le pressage du bouton d'arrêt (50) du mélangeur avec le levier de blocage (18)fermé, de telle sorte que ledit micro-dispositif de commande, après un temps réglable, envoie une commande de relâchement au groupe de blocage/déblocage (19) afin de faire en sorte que la bride (12), qui assure la fermeture de l'ouverture (13), soit relâchée, et dans lequel ledit groupe de blocage/déblocage (19) comprend un dispositif de verrouillage mutuel (60) positionné intégralement avec ladite paroi avant (11) qui collabore avec une tige (26) intégrée à la pièce transversale de fermeture (17) au moyen d'un crochet de calage (24).

2. Congélateur par lots selon la revendication 1, **caractérisé en ce qu'**un corps de support (21) est positionné sur ladite paroi avant (11) et contient, dans un trou de passage traversant (22) de celui-ci, un arbre (23) qui fait saillie à partir de côtés opposés par rapport au corps de support (21), dans lequel ledit arbre (23) porte intégralement, à une première extrémité, ledit crochet de calage (24), qui collabore avec un siège (25) de ladite tige (26) et, à l'autre extrémité libre, il porte un levier (27) qui est inséré dans une fente (28) du dispositif de verrouillage mutuel (60) du groupe de blocage/déblocage (19), dans lequel une extrémité inférieure (27i) du levier (27) est déplacée vers l'avant et vers l'arrière par une feuille de métal (30) du dispositif de verrouillage mutuel (60) du groupe de blocage/déblocage (19).

3. Congélateur par lots selon la revendication 1 ou 2, **caractérisé en ce que** ledit crochet de calage (24) comporte, à son extrémité libre, une dent (24d) qui est positionnée dans un siège (25) de la tige (26) qui s'étend à partir de la bride (12).
